Europäisches Patentamt

European Patent Office

Office européen des brevets

(19)

(11) Publication number: **0 293 272**
**A2**

# (12) EUROPEAN PATENT APPLICATION

(21) Application number: **88304935.5**

(22) Date of filing: **31.05.88**

(51) Int. Cl.⁴: **G 11 B 33/04**

(30) Priority: **28.05.87 GB 8712606**
**09.06.87 GB 8713479**

(43) Date of publication of application:
**30.11.88 Bulletin 88/48**

(84) Designated Contracting States:
**AT BE CH DE ES FR GB GR IT LI LU NL SE**

(71) Applicant: **ABACAD SYSTEMS & DESIGNS LTD.**
**Unit 4 Enterprise Plymouth Somerset Place**
**Stoke Plymouth, Devon, PL3 4BB (GB)**

(72) Inventor: **Butler, Paul**
**100 Taunton Avenue Whitleigh**
**Plymouth, PL5 4ES Devon (GB)**

(74) Representative: **Harrison, Ivor Stanley et al**
**Withers & Rogers 4 Dyer's Building Holborn**
**London EC1N 2JT (GB)**

(54) **Storage case.**

(57) A storage case particularly for cassettes, cassette containers and the like comprises a body portion (11), a lid (12) and an insert tray (14) including partitions for receiving the material to be stored, in which the lid is opened by pivoting about an axis (13) towards the rear of the body and is mechanically engaged with the tray to cause the tray simultaneously to pivot upwardly and forwardly about an axis (16) towards the front of the body.

FIG 2

EP 0 293 272 A2

## Description

## STORAGE CASE

This invention relates to storage cases for example for the storage of cassettes and cassette containers, compact disc containers, and other such items of recording material, whether for domestic or commercial use.

It is known to provide storage cases for such recording material, which expression is to be understood as referring either to the cassette or other holder for the recording material per se or to the individual containers in which the cassettes or holders are usually supplied. Known storage cases generally comprise a base or body portion and a lid or openable closure portion, one of said portions including internal divisions or partitions to define compartments for receiving the recording material. Known storage cases, however, suffer from the disadvantage that either the lid must be detached from the base in order to provide access to the recording material stored therein or the lid or closure portion occupies space behind, to the side of or in front of the body portion when the former is in the open position to allow recording material to be inserted or withdrawn.

It is an object of the present invention to provide a storage case for recording material and which overcomes the disadvantages of known such cases and is aesthetically pleasing to possess and use.

According to the invention, a storage case comprises a body portion and a lid pivotably mounted thereon, in which the body portion includes a displaceable insert tray for receiving material to be stored and operatively connected to the lid, whereby opening or closing of the lid causes the tray to be displaced between a storage position and a loading/ unloading position.

Preferably the insert tray is displaced by being tilted within the body portion about an axis close to its front edge and the lid is pivotably mounted around an axis towards the rear of the body portion, such that the front of the lid is raised to open the case and the insert tray is tilted in opposite fashion upwardly and forwardly. In such an arrangement, the tray is brought into a position whereby recording or other material contained therein may be removed at an angle without the necessity to open the lid fully or through an angle of substantially greater than 90°. Indeed, the lid may possibly be opened through an angle considerably less than 90° to afford access to the contents.

The insert tray may be operatively connected to or mechanically engaged with the lid by means of a flange/peg combination, whereby the flange and peg are positioned for mutual engagement on raising the lid, the peg sliding along the flange as a lost motion linkage to accommodate progressive raising or lowering of the lid, and to impart displacement movement to the tray, so that the lid and insert tray pivot in opposite fashion about respective spaced-apart axes.

The lid may be provided with a stay or latch mechanism to maintain it in the fully-open position against its own weight. Furthermore, downward or closing pivotal motion of the lid and tray may be damped or retarded, for example by a mechanical interference effect between the two parts.

Storage cases according to the invention may optionally be equipped with a carrying handle. Such handles are preferably movable between a recessed position, for selecting when it is not desired to lift the storage case, and a carrying position. It is preferred to provide interlock means for preventing movement of the handle from the recessed position to the carrying position unless the lid and/or tray are in the closed and/or storage positions respectively, and for preventing opening or closing of the lid unless the handle is in the recessed position.

The insert tray is preferably formed with partitions defining compartments or recesses for receiving recording material, or other material to be stored, particularly to hold the material in place when the insert tray is tilted. Such compartments or recesses may be oriented parallel either to the front/rear walls of the case or to the side walls or may be arranged in crossing fashion so that recording material may be stored in either orientation, at the choice of the user.

Embodiments of the invention will now be described by way of example with reference to the accompanying drawings, of which:

Figure 1 is a rear cross-section view of a storage case according to the invention, for the storage of recording material, viewed along the line I-I of Figure 2;

Figure 2 is a side cross-sectional view of the same storage case, viewed along the line II-II of Figure 1;

Figure 3 is an end elevation of an insert tray for use in the storage case of Figures 1 and 2;

Figure 4 is an end elevation of the storage case of Figures 1 and 2 with the insert tray of Figure 3, the case being in a partially open condition;

Figure 5 is a side cross-sectional view of another storage case according to the invention and including a handle, viewed along the line V-V of Figure 6;

Figure 6 is a cross-sectional view from above along the line VI-VI of Figure 5; and

Figure 7 is a side elevation of the handle for use with the case of Figures 5 and 6.

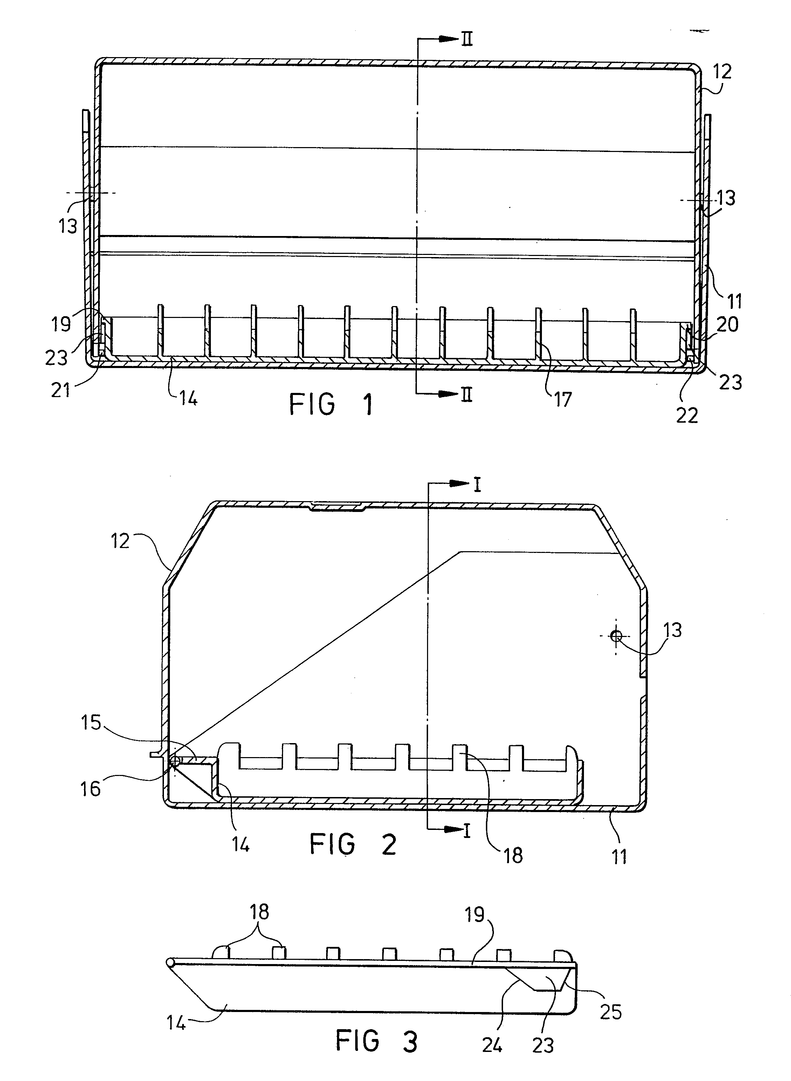

Referring to Figure 1, a storage case consists of a body portion 11 and a lid 12. The lid is pivotable with respect to the body portion towards the rear thereof by virtue of pivots 13. An insert tray 14 is carried in the body portion 11 and, with reference to Figure 2, is tiltably supported along its front edge 15 by pins 16 which are engaged in corresponding holes in the body portion. The tray is formed as a unitary moulding including partitions 17, 18 which respectively define back-to-front and side-to-side orientated storage compartments for audio cassette containers.

Referring to Figure 3, the side edges of the tray are provided with flanges 19, 20 and the side members of the lid are provided with inwardly-directed pegs 21, 22 (Fig. 1) which are each located beneath a respective flange. Towards the rear of and underneath each flange is located a raised formation 23 with a front edge 24 which slopes at a more acute angle than rear edge 25. The raised formation constitutes a latch mechanism for holding the lid in the open position, as more fully described below.

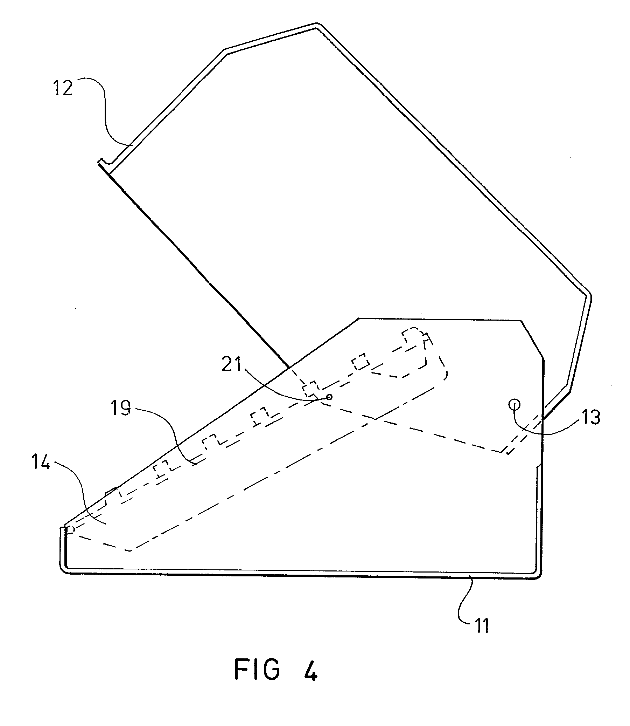

In use and as the lid is raised to open the box, the pegs 21, 22 engage the underside of the flanges 19, 20 thereby causing the tray to tilt upwardly and forwardly, as shown in Fig. 4, from the storage position towards a loading/unloading position. On further raising the lid, each peg slides further along its flange until it meets the front edge 24 of the raised formation 23, over which it slides until the tray drops into a locked position with the peg located behind the rear edge 25. The lid may be unlocked to lower it by raising the tray so that the peg can clear the underside of the raised formation 23.

The component parts of the storage case are conveniently formed from plastics materials by known moulding techniques.

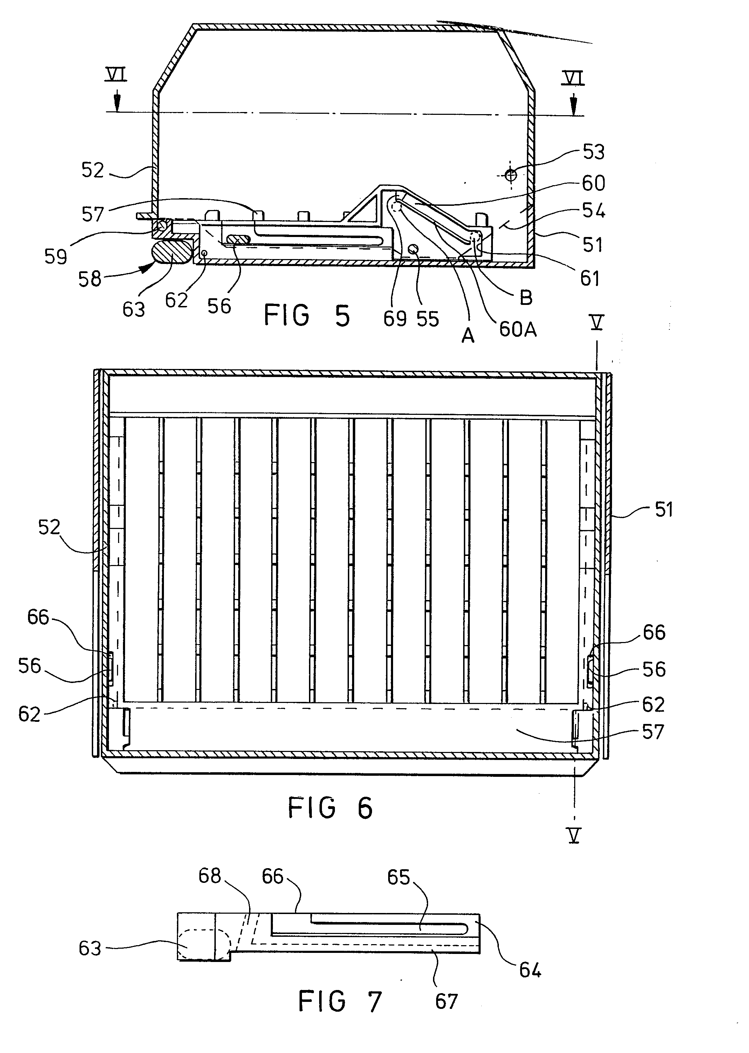

Referring now to Figures 5 to 7, the body portion of a storage case is shown at 51; a lid 52 is pivotably connected thereto around axis 53. As seen in Figure 6, the lid is pivoted inboard of the sides of the body portion and the lid has depending sides the lower edge of which is indicated by the dotted line 54 in Figure 5. An inwardly-directed peg 55 is formed on each depending side and, forward of the peg, an inwardlydirected lip 56 is also formed thereon. The storage case also has an insert tray 57 and a carrying handle 58. The tray is tiltably supported within the body portion at 59 and includes raised end formations each including a sloping open-ended channel section 60, the lower wall 60A of which constitutes a flange, whose open side is outwardly facing, and an end wall 61. The width of the channel section relative to the diameter of the peg 55 is such that the peg is a relatively tight sliding fit within the channel section, or at least is slidable therein with some resistance, depending on the resilience of the construction materials. The lower front corners of the tray each carry an outwardly-directed peg 62.

The handle includes a grab bar 63 attached at its ends to limbs 64. The limbs are slidably located on either side of the tray and, as more clearly seen in Figure 7, are each formed with a longitudinal outward-facing groove 65 the forward end of which is open to the upper side at 66 and the rear end of which is blind, and a longitudinal recess 67 along the lower inside edge and which terminates at its forward end in a sloping channel 68 open to the upper side.

In use, the groove 65 co-operates with the lip 56 formed on each side of the lid and the recess 67 co-operates with the peg 62 formed at each front corner of the tray, to provide an interlocking effect between the handle and the lid. Thus, with the handle in the recessed position, as shown in Figure 5, the lip 56 is aligned with the open end 66 of the groove 65, thereby allowing the lid to be raised and lowered. Furthermore, the locus of the peg 62 on tilting the tray lies within the sloping channel 68, thereby permitting raising and lowering of the tray. With the tray in the lowered position, with the peg 62 aligned with the recess 67, and the lid closed, the handle may be slid outwardly (to the left in Figure 5) to the carrying position, the grooves 65 sliding over the lips 56 until the blind end of the groove reaches the lip. The storage case may then be carried and the lid is prevented from opening by engagement of the lips 56 beneath the upper walls of the grooves 65.

To open the storage case, the handle is retracted to its recessed position, thereby freeing the lid and tray for pivotal/tilting movement. On pivoting the lid towards the open position, the peg 55 engages with the flange 60A constituted by the underside of the lower wall of the channel section 60 of the tray, at position A (Figure 5) and, on continued raising of the lid, slides along the flange while at the same time causing the tray to tilt upwardly and forwardly, until the peg 55 over-rides the end of the flange and becomes located against the end wall 61 (position B), at which point the lid can be opened no further. As can be seen, at position B the peg 55 is positioned at the mouth of the channel section 60 which forms its return route on closing the lid but which provides a degree of resistance or retardation due to the relative sizes of the peg and the channel section and to the resilience of the construction material.

On lowering the lid, the peg 55 is caused to slide along the channel section 60 until it is disengaged therefrom by outwardly-sloping channel base section 69.

Although the invention has been particularly described with reference to the storage of recording material, it could also be used for the storage of other material such as, for example, medical or laboratory apparatus, samples, compositions and the like, photographic materials, artists' materials, needlework materials, and in any other application in which it is desirable to move the stored material from a storage position to a loading/unloading position on opening the lid.

**Claims**

1. A storage case comprising a body portion (11; 51) and a lid (12; 52) pivotably mounted thereon, in which the body portion (11; 51) includes a displaceable insert tray (14; 57) for receiving material to be stored and operatively connected to the lid (12; 52), whereby opening or closing of the lid causes the tray to be displaced between a storage position and a loading/unloading position.

2. A storage case according to Claim 1, in which the insert tray (14; 57) is displaceably connected to the body portion (11; 51) about a pivotal axis (16; 59) towards the front of the body portion and the lid (12; 52) is pivotably mounted around an axis (13; 53) towards the rear of the body portion.

3. A storage case according to Claim 1 or Claim 2, in which the insert tray (14; 57) is operatively connected to the lid (12; 52) by means of a flange/peg combination (19, 20/21, 22; 55/60A), whereby the flange and peg are positioned for mutual engagement/disengagement and relative sliding motion to cause displacement movement of the tray on raising or lowering of the lid.

4. A storage case according to any preceding claim, in which the lid (12; 52) is provided with a stay or latch mechanism (23-25; 55, 60) to maintain the lid in the open position against its own weight.

5. A storage case according to any preceding claim, in which the lid (12; 52) is provided with means to dampen or retard downward or closing pivotal movement thereof.

6. A storage case according to any preceding claim, further including a carrying handle (58).

7. A storage case according to Claim 6, in which the carrying handle (58) is movable between a recessed and a carrying position.

8. A storage case according to Claim 6 or Claim 7, in which the carrying handle (58) is interlockable with the lid (52).

FIG 1

FIG 2

FIG 3

FIG 4

**FIG 5**

52
57
59
58
63 62 56
69 55
A
53
60
54
51
61
B
60A

**FIG 6**

52
66
56
62
57
51

**FIG 7**

68 66 65
63
64
67